# EUROPEAN PATENT SPECIFICATION

(11) **EP 2 949 920 B1**
(45) Date of publication and mention of the grant of the patent: **21.06.2017**
(21) Application number: 14382205.4
(22) Date of filing: 30.05.2014
(51) Int. Cl.: F03B 13/14, F03B 13/24

(54) **Turbine for harnessing wave energy**
Vorrichtung zur Nutzung von Wellenenergie
Turbine pour exploiter l'énergie des vagues

(43) Date of publication of application: 02.12.2015
(73) Proprietor: Sener Ingenieria Y Sistemas, S.A., 48930 Las Arenas - Vizcaya (ES)
(72) Inventor: Zabala, Iñaki, 48006 BILBAO (ES); Amezaga, Alvaro, 48940 LEIOA (ES)
(74) Representative: Carvajal y Urquijo, Isabel

(56) References cited:
- WO-A2-2012/112892
- GB-A- 813 343
- JAYASHANKAR V ET AL: "A twin unidirectional impulse turbine topology for OWC based wave energy plants", RENEWABLE ENERGY, PERGAMON PRESS, OXFORD, GB, vol. 34, no. 3, 2 July 2008 (2008-07-02), pages 692-698, XP025585408, ISSN: 0960-1481, DOI: 10.1016/J.RENENE.2008.05.028 [retrieved on 2008-07-02]
- MANABU TAKAO ET AL: "Air Turbines for Wave Energy Conversion", INTERNATIONAL JOURNAL OF ROTATING MACHINERY, vol. 20, no. 5, 11 April 2012 (2012-04-11) , pages 394-10, XP055150212, ISSN: 1023-621X, DOI: 10.1016/j.renene.2010.06.043

## Description

### Field of invention

The present invention pertains to the field of capturing wave energy by using oscillating water column technology, and more specifically, to the unidirectional turbine that transforms the airflow into rotational movement in order to be transmitted to a generator.

### Background of the invention

Currently, oscillating water column (OWC) devices for generating energy from waves are probably the most studied and one of the few that have reached the full-scale prototype stage. The alternating airflow displaced by the movement of the free surface of the water inside the column actuates an air turbine mounted in the upper portion of the generating device away from the direct effect of the water. Given that the movement of the air is bidirectional, alternating flow must be converted to unidirectional flow so that unidirectional turbines may be used. Alternatively, the plant may be equipped with a self-rectifying bidirectional turbine, which removes the need for non-return valves or other means. The latter has been adopted in the majority of pilot plants built to date, normally using the Wells turbine.

The efficiency of turbines is closely linked to the flow factor that depends on the rotation speed of the rotor, the airflow speed and the vane angle, both those of the rotor and the stator. In order to reduce the influence of flow changes on efficiency at the expense of a greater mechanical complexity and cost, turbines with a variable geometry that control the pitch of the vane are used. There are multiple implementations regarding the pitch control of vanes, which are mainly applied in the rotor and have mechanisms that are actuated by hydraulic systems, electromagnetic systems, etc., but major technical problems have been encountered due to the difficulty of inserting mechanisms in a rotor that rotates at high speeds and moreover is in a marine environment. Equally, the placement of the rotor, with very poor accessibility, makes maintenance operations very difficult.

In this respect, the patent US2005271508 presents a variable pitch system by means of air thrust for symmetrical vanes through the flexibility of the vane. Air thrust deforms the flexible portion of the vane, thus obtaining an improved aerodynamic shape, although it has the disadvantage that it is only applied to symmetrical vanes and the flexibility implies a lack of surface hardness of the vane that reduces the durability thereof, causes an increase in marine waste and reduces aerodynamic performance.

The patent US20100290908 shows a pitch change mechanism for an OWC turbine based on a gear system. The pitch change system is complex and is situated in the rotor such that there are serious maintenance problems and high consumption for the actuation thereof, along with low performance as it is a symmetrical vane.

The patent US20130255246 describes a bidirectional turbine with a rotor that has variable pitch change where the vanes pivot around a shaft and has a mechanism that controls the rotation of each blade. This patent changes the pitch of the rotor vane and does not use guide vanes. Thus, it has mechanical and maintenance complexity.

And the patent US20130145753 describes a bidirectional turbine with a rotor that has variable pitch change where the vanes pivot by means of a rotation shaft that is parallel to the leading edge and a mechanism that controls the rotation of each blade. This patent changes the pitch of the rotor vanes and does not use guide vanes. Thus, it has great mechanical and maintenance complexity.

Another drawback is the need for precise sensors and quick actuators for the active pitch change of the vanes. Passive pitch change equipment for the rotor vanes has been proposed, which are therefore quick-acting and consumption-free, through enabling the increase in air thrust to tend to open the pitch angle of the vanes. This positive effect is limited due to the fact that there is no constant law that is valid in all cases that optimally regulates the degree to which the vanes open with the pressure difference and the rotation speed of the turbine.

Another problem occurs when, as this equipment is situated in the rotor, the rotation of the same produces a centrifugal force on the vanes, as the centre of gravity of the vane does not coincide with the rotation shaft thereof, which modifies the balance of forces and varies the angle of the vane. This may only be partially compensated with simple curvature vanes that are well counterweighted.

Document WO2012/112892 discloses an axial-flow turbine assembly with features for enhancing the efficiency of the turbine's operation. In one embodiment the turbine assembly includes a rotor with blades that adjust their pitch angle in direct response to working fluid pressure on the blades themselves or other part of the rotor. In other embodiments, the turbine assembly is deployable in an application, such as an oscillating water column system, in which the flow of working fluid varies over time. In a first of these embodiments, the turbine assembly includes a valve that allows the pressure to build so that the flow is optimized for the turbine's operating parameters. In a second of these embodiments, one or more variable-admission nozzle and shutter assemblies are provided to control the flow through the turbine to optimize the flow relative to the turbine's operating parameters.

Document GB 813343 discloses improvements relating to apparatus for the control of ducted fluids. The apparatus has a plurality of vanes arranged successively across the flow path of the fluid, and each extending longitudinally in a direction across said path. Each vane is pivotable around an axis extending longitudinally thereof to vary the obstruction by the vane to fluid flowing along the flow path. The apparatus have means controlling the pivoting of each vane independently of at least some of the other vanes in dependence upon variations in the velocity of fluid approaching the region of the vane in a sense to oppose such variations by varying the obstruction.

### Description of the invention

The invention relates to a turbine that is valid for OWC devices that have a high performance and strength in real operation, with an immediate response to changing sea conditions and airflow that are produced in a matter of seconds.

One subject matter of the invention is a unidirectional turbine whose stator has variable-pitch guide vanes and whose rotor has fixed vanes. Since they are unidirectional, the vanes have a profile with an aerodynamic and asymmetrical design that is better than those used in bidirectional turbines and, with the variable pitch change, high turbine performance is achieved for all the operating speeds due to the quick adaptation of the vane pitch to the changing sea conditions. Moreover, having pitch change be situated in the stator enables a much simpler mechanism to be installed than if it were in the rotor.

A further subject matter of the present invention is a guide vane actuation system with semi-active variable pitch that makes the vane immediately and passively achieve an angle of equilibrium that maximises the performance of the turbine for each operating speed. This angle of equilibrium is achieved due to the fact that the buoyancy and resulting torque produced on the vanes because of the drag and lift of the air when passing through the same, is compensated by an actuation system that may include a spring and/or damper. Given that the sea conditions change frequently, the control is capable of varying the rigidity and/or dampening constants of the actuating system. And in order to widen the scope of efficiency of the turbine, even when starting-up and stopping, the actuation system includes an actuator that moves the angle of the vanes to the most appropriate operating range.

The following advantages are derived from what has been described above: the proposed invention improves the performance of the turbine due to the immediate adaptation thereof to the changes in operating speed, as well as an optimised design of the vane profiles. Moreover, as the pitch change mechanisms are situated between the inner casing that covers the rotation shaft and the outer cover of the turbine, they are kept away from the damp sea airflow such that they are protected from corrosion. Furthermore, by being situated in the upper or lateral portion of the turbine they are safe from possible dripping produced in the case of cracks, fissures or leaks. Moreover, because the actuation system is situated in the stator, the added complexity entailed by compensating the strain caused by the rotation of the rotor is avoided, and access for maintenance is facilitated.

### Brief description of the drawings

What follows is a very brief description of a series of drawings that aid in better understanding the invention, and which are expressly related to an embodiment of said invention that is presented by way of a non-limiting example of the same.
Figure 1 shows a schematic cross-section of the axial turbine.
Figure 2 represents a perspective view of the turbine and the transparent casing thereof.
Figure 3 shows a detailed view of the actuation systems on the vanes.
Figure 4 shows different vane positions.
Figure 5 represents the position of the actuator equipment and a schematic view of the inside thereof.
Figure 6 shows the cross-section of a radial turbine.

### Detailed description of the invention

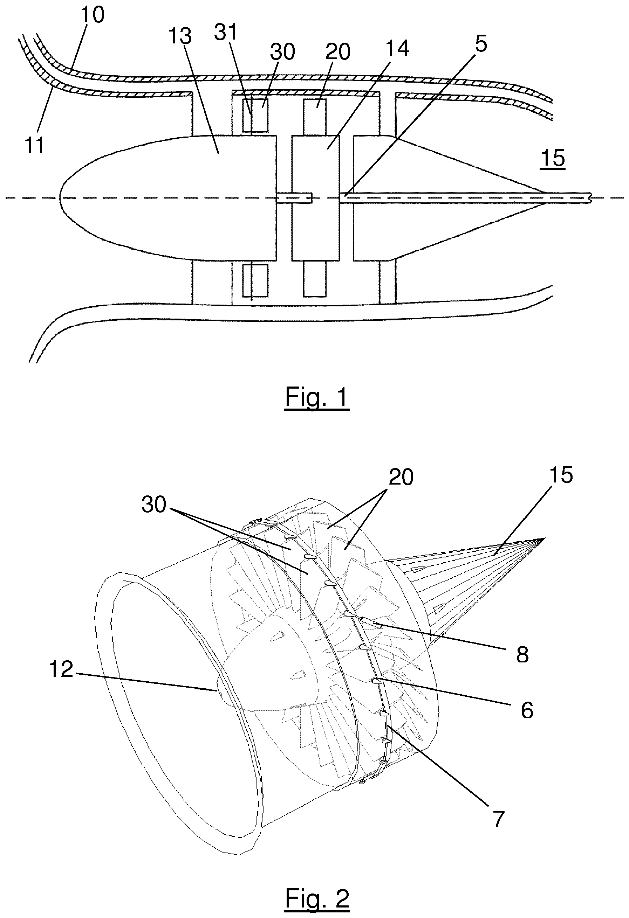

As shown in figure 1, the turbine consists of an outer cover (10) and an inner casing (11), a stator (13) with guide vanes (30) and a rotor (14) with fixed vanes (20). The guide vanes (30) are fixed between the inner casing (11) and the stator (13). The guide vanes (30) have a variable pitch and regulate the airflow on the fixed vanes of the rotor (20). These vanes (30) may move since each one has a rotation shaft (31) between the fixing points: the inner casing (11) and stator (13). The rotor (14) and the fixed vanes (20) thereof rotate coupled to the rotation shaft (5).

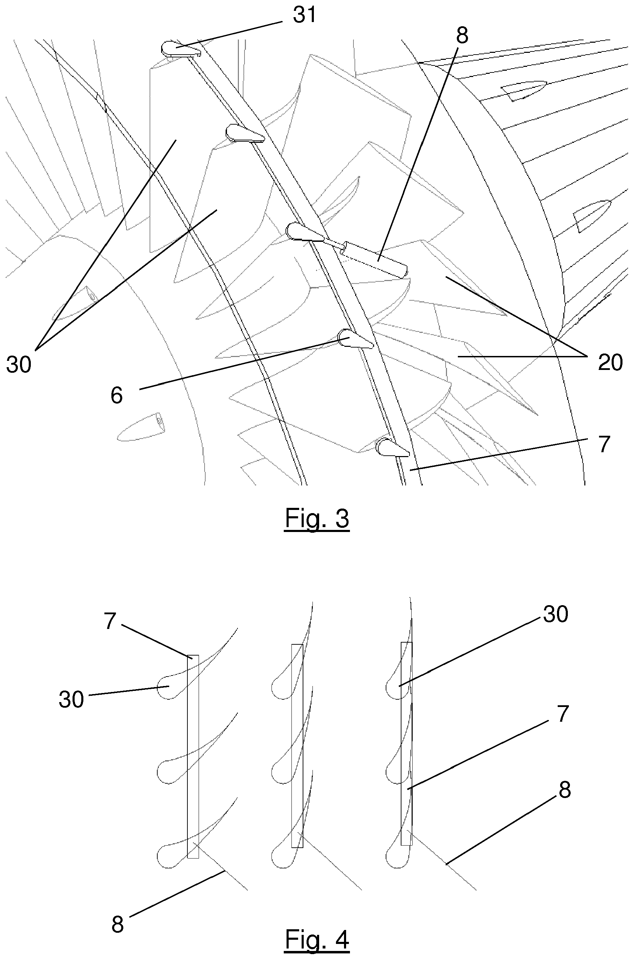

In a possible implementation shown in figure 2 and in the detailed view of figure 3, all the guide vanes (30) pivot around the longitudinal rotation shaft (31) thereof and are physically joined to each other, such as through a ring (7) for example. In said implementation, each vane (30) has a connecting rod (6) that is articulated on a ring (7) situated around the turbine. As one or several actuating systems (8) coupled to the ring (7) moves linearly, the rotation thereof is produced and, as a result, the simultaneous rotation of all the vanes (30) with the same angle. In other implementations, there may be other different vane rotation mechanisms. In other implementations, there may not be any mechanism as each vane has its own actuating system.

As shown in figure 4, the speed and appropriate adjustment of the control system that commands the pitch change are key to achieving high performance with low consumption, while using simple and long-lasting technological solutions. Thus, the actuation of the guide vanes (30) is such that it enables the thrust and resulting torque produced on these vanes because of the drag and lift produced by the air when passing through them, to tend to open the pitch thereof. The input parameters for the control system that adapts to each moment are: the air pressure difference, the generator torque, the rotation speed of the rotor and the sea conditions. Other aspects to take into account in terms of control are the operating mode (start-up, normal operation or braking), the search for active and reactive power, etc. The control system sends the signals to the actuation system (8) which, makes it so that the vane immediately reaches an angle of equilibrium corresponding to maximum performance. As it is proven that the law of variation of the actuation force that causes the guide vane to have the optimal orientation is not constant, it is in order to achieve this optimal orientation that the parameters of the actuation system (8) are changed.

Thus, the turbine of the present invention consists of a guide vane (30) actuation system (8) that enables the thrust of the flow and resulting torque produced on the vanes because of the drag and lift produced by the air when passing through the same, to tend to change the pitch of the vanes as shown in figure 4. Thus, using appropriate compensation from a spring and/or damper, the vane (30) may be made to immediately reach an angle of equilibrium that maximises the performance of the turbine for each operating speed. In this situation the actuator is not active, but the vane is subjected to the spring (82) and/or damper (83) torque. Thus, the actuation system is semi-active: the spring and damper provide a small but immediate (passive) rotation angle, while the actuator (81) provides a larger rotation angle but the actuation thereof is much slower. The constants of rigidity in the spring (82), dampening in the damper (83) and the extension/rotation of the actuator (81) are modified with the control system. The constant of the spring (82) is modified with an actuator that lengthens or shortens the same, and the constant of the damper (83) is modified by making fluid pass through a restrictor valve. In other implementations, the modification of the constants of the spring and the damper may be carried out in different ways.

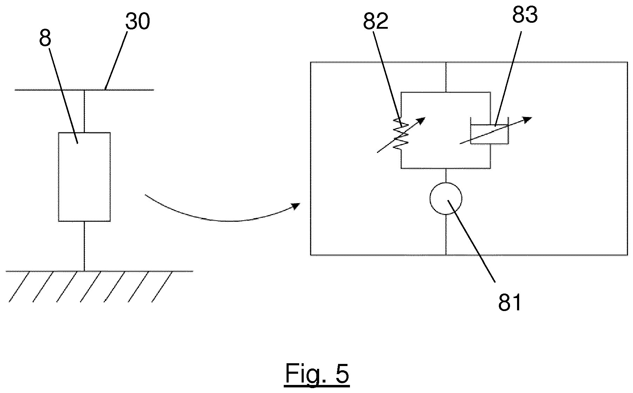

Figure 5 shows the actuation system (8) that is formed of an actuator (81), a spring (82) and a damper (83). Among other possible practical embodiments, the actuator (81) may be electromagnetic or hydraulic, such that changing the constant of the spring may be carried out via an electromagnetic or hydraulic actuator, and changing the constant of the damper may be carried out with the use of restrictor valves or with the use of magnetorheological dampers that enable the viscosity of the fluid being used to be changed using a magnetic field.

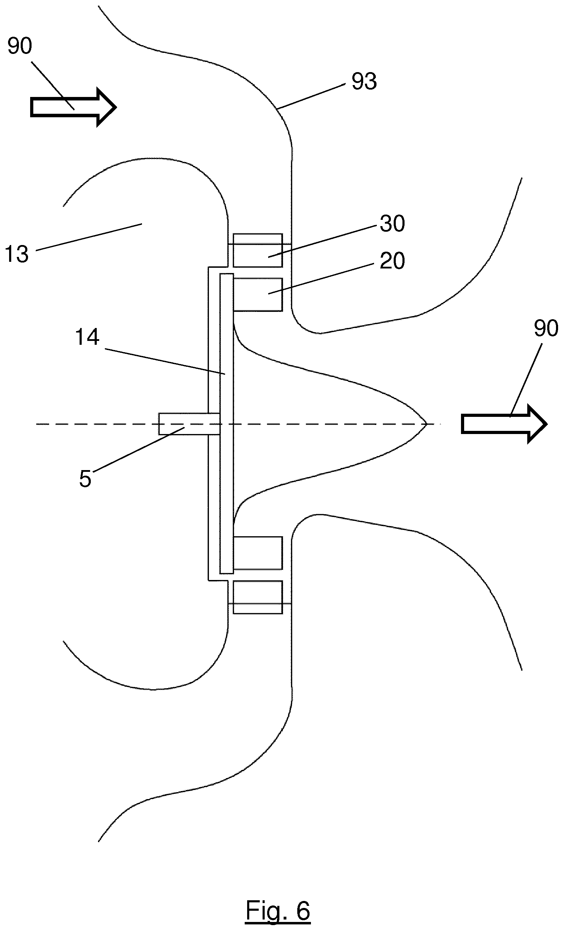

As shown in figure 6, everything mentioned above is valid for both axial (the turbines mentioned up until now) and radial (the turbine in figure 6) turbines. The airflow (90) passes through the guide vanes (30) that are established between the stator (13) and the cover (93). The semi-active actuation system of said vanes (30) immediately reaches the angle of equilibrium in order for the vanes (20) of the rotor (14) to obtain maximum performance. Subsequently, the rotation of the rotor (14) is transmitted to the generator, the latter being responsible for generating electricity.

## Claims

1. Air turbine for harnessing wave energy with oscillating water column devices, said turbine being unidirectional and formed of an outer cover (10), and an inner casing (11), which houses a stator (13) comprising guide vanes (30), and a rotor (14) comprising rotor vanes (20), the rotor (14) coupled to the corresponding generator thereof, wherein the guide vanes (30) of the stator (13) have variable pitch and **characterized in that** the turbine comprises at least one semi-active actuation system (8) comprising in turn an actuator (81) and dampening means (82,83), which actuates the guide vanes (30) of the stator (13) either directly or through a mechanism that synchronizes the variation of the pitch angle of all the guide vanes in order to change the pitch of said vanes, and a control system for commanding the actuation system (8).

2. Air turbine for harnessing wave energy with oscillating water column devices, according to any of the preceding claims, **characterized in that** input data of the control system are the air pressure difference between the input and the output of the turbine, the rotation speed of the rotor, the sea conditions and the operating modes, the output of the control system being the signals that modify the actuation system.

3. Air turbine for harnessing wave energy with oscillating water column devices, according to claim 1, **characterised in that** the dampening means comprise a spring (82) with controllable rigidity and/or a damper (83) with controllable dampening, which compensate the torque on the guide vanes (30) of the stator (13) and achieve a specific angle for said guide vanes (30), enabling the airflow thrust and resulting torque produced on the guide vanes (30) of the stator (13) to passively change the pitch thereof, and **in that** the actuator (81) actively changes the guide vanes (30)

4. Air turbine for harnessing wave energy with oscillating water column devices, according to claim 1, **characterised in that** the turbine is selected between axial and radial turbines.

## Patentansprüche

1. Windturbine zur Nutzbarmachung von Wellenenergie mit oszillierenden Wassersäulenvorrichtungen, wobei die Turbine unidirektional ist und aus einer äußeren Abdeckung (10) und einem inneren Gehäuse (11), in welchem ein Stator (13), der Führungsschaufeln (30) umfasst, und ein Rotor (14), der Rotorschaufeln (20) umfasst, aufgenommen sind, gebildet ist, wobei der Rotor (14) mit dem entsprechenden Generator davon gekoppelt ist, wobei die Führungsschaufeln (30) des Stators (13) eine variable Neigung aufweisen, und **dadurch gekennzeichnet, dass** die Turbine mindestens ein halbaktives Betätigungssystem (8) umfasst, das wiederum einen Aktuator (81) und Dämpfungsmittel (82, 83) umfasst, welches die Führungsschaufeln (30) des Stators (13) entweder direkt oder durch einen Mechanismus betätigt, der die Veränderung des Neigungswinkels aller Führungsschaufeln synchronisiert, um die Neigung der Schaufeln zu verändern, und ein Steuersystem zum Kontrollieren des Betätigungssystems (8) umfasst.

2. Windturbine zur Nutzbarmachung von Wellenenergie mit oszillierenden Wassersäulenvorrichtungen nach dem vorherigen Anspruch, **dadurch gekennzeichnet, dass** Eingabedaten des Steuersystems der Luftdruckunterschied zwischen dem Eingang und dem Ausgang der Turbine, die Drehgeschwindigkeit des Rotors, der Seegang und die Betriebsmodi sind, wobei die Ausgabe des Steuersystems die Signale sind, die das Betätigungssystem abändern.

3. Windturbine zur Nutzbarmachung von Wellenenergie mit oszillierenden Wassersäulenvorrichtungen nach Anspruch 1, **dadurch gekennzeichnet, dass** die Dämpfungsmittel eine Feder (82) mit steuerbarer Steifigkeit und/oder einen Dämpfer (83) mit steuerbarer Dämpfung umfassen, welche das Drehmoment an den Führungsschaufeln (30) des Stators (13) ausgleichen und einen bestimmten Winkel für die Führungsschaufeln (30) erzielen, was den Luftströmungsschub und das resultierende Drehmoment, das an den Führungsschaufeln (30) des Stators (13) produziert wird, ermöglicht, um die Neigung davon passiv zu verändern, und dass der Aktuator (81) aktiv die Führungsschaufeln (30) verändert.

4. Windturbine zur Nutzbarmachung von Wellenenergie mit oszillierenden Wassersäulenvorrichtungen nach Anspruch 1, **dadurch gekennzeichnet, dass** die Turbine unter axialen und radialen Turbinen ausgewählt wird.

## Revendications

1. Turbine à air pour l'exploitation de l'énergie des vagues avec des dispositifs de colonne d'eau oscillante, ladite turbine étant unidirectionnelle et formée d'un capot externe (10), et d'un carter interne (11), qui loge un stator (13) comprenant des aubes directrices (30), et un rotor (14) comprenant des aubes de rotor (20), le rotor (14) étant couplé au générateur correspondant de celui-ci, dans laquelle les aubes directrices (30) du stator (13) ont un pas variable et **caractérisée en ce que** la turbine comprend au moins un système d'activation semi-actif (8) comprenant à son tour un activateur (81) et des moyens amortisseurs (82, 83), qui active les aubes directrices (30) du stator (13) soit directement soit par le biais d'un mécanisme qui synchronise la variation de l'angle de pas de toutes les aubes directrices afin de changer le pas desdites aubes, et un système de contrôle pour commander le système d'activation (8).

2. Turbine à air pour l'exploitation de l'énergie des vagues avec des dispositifs de colonne d'eau oscillante, selon l'une quelconque des revendications précédentes, **caractérisée en ce que** les données d'entrée du système de contrôle sont la différence de pression d'air entre l'entrée et la sortie de la turbine, la vitesse de rotation du rotor, les conditions maritimes et les modes de fonctionnement, la sortie du système de contrôle étant les signaux qui modifient le système d'activation.

3. Turbine à air pour l'exploitation de l'énergie des vagues avec des dispositifs de colonne d'eau oscillante, selon la revendication 1, **caractérisée en ce que** les moyens d'amortissement comprennent un ressort (82) avec une rigidité contrôlable et/ou un amortisseur (83) à amortissement contrôlable, qui compensent le couple sur les aubes directrices (30) du stator (13) et obtiennent un angle spécifique pour lesdites aubes directrices (30), permettant l'impulsion de flux d'air et obtenant le couple produit sur les aubes directrices (30) du stator (13) pour changer passivement le pas de celui-ci, et **en ce que** l'activateur (81) change activement les aubes directrices (30).

4. Turbine à air pour l'exploitation de l'énergie des vagues avec des dispositifs de colonne d'eau oscillante, selon la revendication 1, **caractérisée en ce que** la turbine est choisie entre la turbine axiale et la turbine radiale.
